# EUROPEAN PATENT SPECIFICATION

(11) **EP 4 498 474 B1**
(45) Date of publication and mention of the grant of the patent: **03.12.2025**
(21) Application number: 23217566.1
(22) Date of filing: 18.12.2023
(51) Int. Cl.: H01M 10/42, H01M 10/48, H01M 50/569, H01M 10/617, H01M 10/653, H01M 10/6554, H01M 50/103, H01M 50/15, H01M 50/176, H01M 50/188, H01M 50/55, H01M 50/591

(54) **BATTERY**
BATTERIE
BATTERIE

(30) Priority: 25.07.2023 CN 202321965532 U
(43) Date of publication of application: 29.01.2025
(73) Proprietor: Eve Power Co., Ltd., Jingmen, Hubei 448000 (CN)
(72) Inventor: ZHAO, Ruirui, Jingmen, Hubei, 448000 (CN); LIU, Pengchengi, Jingmen, Hubei, 448000 (CN); LIU, Liangliang, Jingmen, Hubei, 448000 (CN); QI, Dongrong, Jingmen, Hubei, 448000 (CN)
(74) Representative: Herrero & Asociados, S.L.

(56) References cited:
- WO-A1-2023/010798
- CN-A- 114 678 607
- US-A1- 2015 132 614
- US-A1- 2015 301 113
- US-A1- 2023 282 914

## Description

### TECHNICAL FIELD

The present disclosure relates to the field of electric energy storage devices, and in particular to a battery.

### BACKGROUND

In the art, internal information of a large-sized battery may be obtained by arranging an external component, and that is, an information obtaining component is disposed out of the battery. An obtaining end of the information obtaining component may be insulated with a battery cover and extends through the battery cover to reach an interior of the battery. In addition, the battery, which has information to be obtained, supplies power to the information obtaining component. The above structure has the following problems.
1. The information obtaining component consumes a current of the battery. The information obtaining component itself has power consumption. The information obtaining component may fail in a processing process. In this case, the power consumption may be increased, and therefore, reliability of an overall system of the battery may be affected, resulting in battery failure.
2. Original battery cover elements may need to be re-modified, such that complexity of the battery cover may be improved, costs of the battery cover may be increased, and reliability of the battery cover may be reduced.
3. A process of assembling the battery is complex. An existing production line needs to be changed dramatically and may not be promotively applied.

US20150132614A1 discloses a sensor arrangement that includes a transmitter to be arranged inside a battery cell and to transmit a signal based on at least one sensed operational parameter of the battery cell wirelessly.

CN114678607A discloses a battery cover plate. The battery cover plate includes a plate body, a battery management unit, and a sensor assembly. The plate body has an outer surface and an inner surface facing away from the outer surface. The battery management unit is disposed in the plate body, where a transmission structure is provided between the battery management unit and the outer surface, and the battery management unit includes a wireless communication module. The wireless communication module may perform wireless communication with the outside by using the transmission structure. The sensor assembly is connected to the battery management unit, where the sensor assembly is disposed in the plate body and extends out of the inner surface.

US20150301113A1 discloses a battery monitoring system that includes a self-contained measurement device configured to mount to a battery cell. The self-contained measurement device includes a sensor configured to monitor an operational parameter of the battery cell, and a communication module configured to output a signal indicative of the operational parameter.

WO2023010798A1 discloses a battery cell, a battery module, a battery pack and an electric vehicle. The battery cell includes: a housing, which is provided with at least one opening; a cover plate, which is arranged at an open end of the housing and seals the open end of the housing; a wound cell, which is arranged inside the housing and includes a positive plate, a negative plate, a positive tab and a negative tab, where the positive plate is connected to the positive tab, and the negative plate is connected to the negative tab; a positive terminal and a negative terminal, which are respectively arranged on the cover plate, where the positive terminal is connected to the positive tab, and the negative terminal is connected to the negative tab; and a collection circuit, which is arranged inside the housing, includes at least one chip, and is used for collecting working parameters of the wound cell.

### SUMMARY OF THE DISCLOSURE

The present invention provides a battery according to claim 1. Preferred embodiments are defined in the dependent claims. An information obtaining component of the battery has less influence on an overall system of the battery. A structure of the battery is simple, and a production cost of the batte is low.

In an aspect, the present invention provides a battery, including an outer housing, at least one information obtaining component, a pole and a cell. The cell is received in a first receiving cavity of the outer housing, the outer housing is arranged with an insulating member. The pole extends through the outer housing and is connected to the cell. The at least one information obtaining component is received in the first receiving cavity and fixed to the cell. Each of the at least one information obtaining component includes a detection assembly, a power supply battery, a wireless transmitting end, a circuit board, and a sealing shell. The detection assembly, the power supply battery, and the wireless transmitting end are electrically connected with each other via the circuit board. A detection end of the detection assembly is attached to the cell, the wireless transmitting end is disposed adjacent to the insulating member and is configured to transmit a signal, and the signal is capable of transmitting through the insulating member to reach an exterior of the first receiving cavity. The sealing shell has a second receiving cavity, wherein the power supply battery, the wireless transmitting end, and the circuit board are received in the second receiving cavity. The sealing shell abuts against a circumferential face of the pole, and the sealing shell is insulated from the pole.

In some embodiments, the pole further extends through the insulating member. The insulating member is disposed between an end of the pole and the outer housing, the other end of the pole is received in the first receiving cavity; and the at least one information obtaining component is arranged on a side of the cell near the pole.

In some embodiments, the detection assembly includes a detection signal line. An end of the detection signal line is connected to the circuit board, the other end of the detection signal line is arranged with the detection end. The cell comprises a first cell pack and a second cell pack, the detection signal line is disposed between the first cell pack and the second cell pack. The detection end is configured to detect information of a first attachment face of the first cell pack and information of a second attachment face of the second cell pack, and the attachment face is a surface to which the detection end is attached.

In some embodiments, a heat-homogenization plate is arranged on both the first cell pack and the second cell pack; the heat-homogenization defines an avoidance groove; and the detection signal line is received in the avoidance groove.

In some embodiments, the sealing shell is non-metallic.

In some embodiments, the insulating member is disposed between the pole and the outer housing, and the sealing shell abuts against the insulating member.

In some embodiments, the sealing shell is insulated from the pole through the insulating member.

In some embodiments, the at least one information obtaining component is adhered to the cell.

In some embodiments, the number of the at least one information obtaining component is at least two.

In some embodiments, the number of the at least one information obtaining component is two, the cell has a mounting face, a tab is arranged on the mounting face, the two information obtaining components are arranged on the mounting face, the tab is disposed between the two information obtaining components.

In some embodiments, the cell includes a first cell pack and a second cell pack; one of the two information obtaining components is configured to detect information on a first attachment face of the first cell pack; and the other one of the two information obtaining components is configured to detect information on a second attachment face of the second cell pack.

In some embodiments, the detection signal line includes a temperature signal line and a pressure signal line. The information of the attachment face comprises a temperature of the attachment face and a pressure of the attachment face. The temperature signal line is configured to detect the temperature of the attachment face; and the pressure signal line is configured to detect the pressure of the attachment face.

According to the present disclosure, the information obtaining component is disposed inside the battery and transmits the obtained information to the exterior of the battery by transmitting wireless signals. In this way, an additional hole does not need to be defined in the case of the battery, such that the production cost of the battery is reduced, and versatility of the information obtaining component is improved. The power supply battery is disposed inside the information obtaining component. That is, the information obtaining component has an independent power supply, the information obtaining component operates independently. On the one hand, the information obtaining component does not consume the electrical energy of the battery. On the other hand, a risk that failure of the information obtaining component causes systematic failure of the entire battery may be reduced, ensuring reliability of the cell of the battery. The wireless transmitting end is disposed adjacent to the insulating member. In this way, wireless signals emitted by the wireless transmitting end may not be shielded internally, ensuring the wireless transmitting end to successfully transmit the obtained information of the battery to the exterior of the battery.

### BRIEF DESCRIPTION OF THE DRAWINGS

The present disclosure is described in further detail below by referring to the accompanying drawings and embodiments.
FIG. 1 is an exploded view of a battery according to an embodiment of the present disclosure.
FIG. 2 is a schematic view showing positions of a signal detecting component and a cover according to an embodiment of the present disclosure.
FIG. 3 is a schematic view of the signal detecting component according to an embodiment of the present disclosure.

In the drawings:
1, insulating member; 2, outer housing; 21, case; 22, cover; 3, information obtaining component; 31, power supply battery; 32, circuit board; 33, wireless transmitting end; 34, detection signal line; 341, temperature signal line; 342, pressure signal line; 35, sealing shell; 351, second receiving cavity; 4, pole; 5, cell; 51, first cell pack; 52, second cell pack; 53, tab; 54, mounting face; 6, connector; 7, bottom sheet; 8, protective film.

### DETAILED DESCRIPTION

In order to illustrate the technical problems to be solved by the present disclosure, technical solutions provided by the present disclosure, and technical effects achieved by the present disclosure more clearly, the technical solutions of the embodiments of the present disclosure will be described in further detail in the following by referring to the accompanying drawings. Obviously, the described embodiments show only a part of but not all of the embodiments of the present disclosure. All other embodiments, which are obtained by any ordinary skilled person in the art based on the embodiments in the present disclosure without any creative work, shall fall within the scope of the present disclosure.

In the description of the present disclosure, unless otherwise expressly provided and limited, the terms "connected", "coupled", and "fixed" shall be understood broadly. For example, the terms may mean fixed connection, detachable connection or structures being configured as a one-piece and integral structure; mechanical connection or electrical connection; direct connection or indirect connection through an intermediate medium; two elements being internally connected with each other or an interaction between two elements. Any ordinary skilled person in the art shall understand the specific meaning of the above terms herein depending on specific cases.

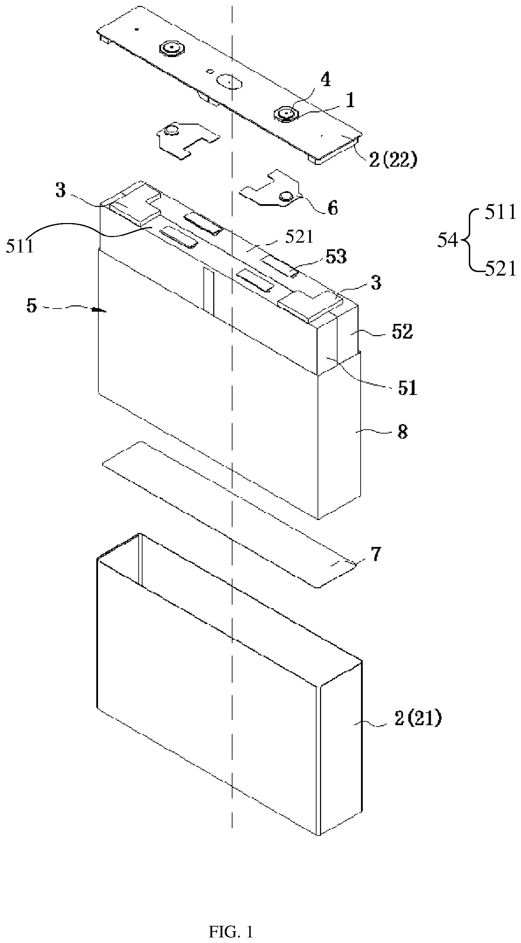

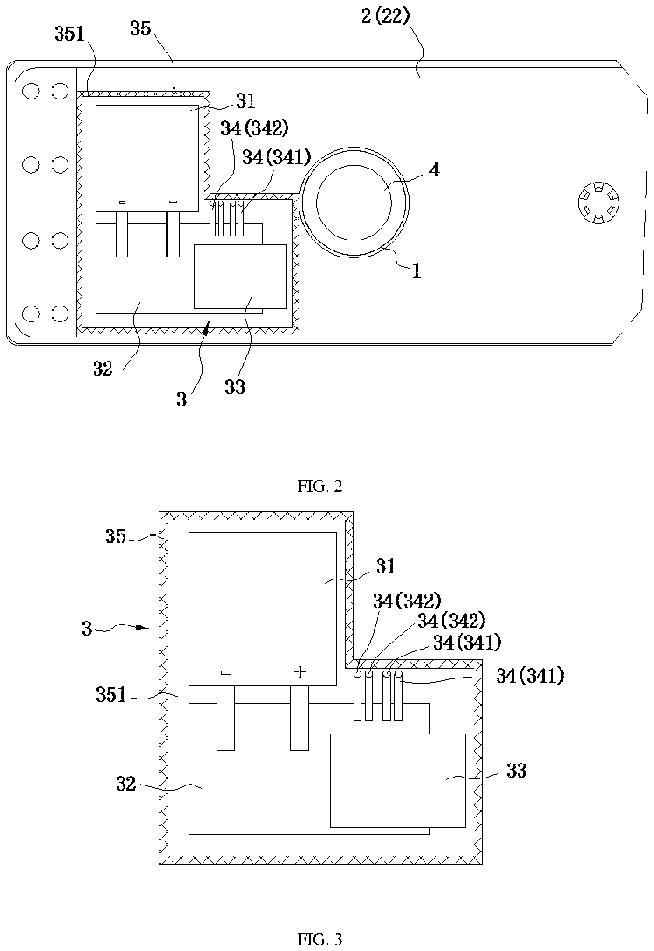

As shown in FIG. 1 and FIG. 2, the present disclosure provides a battery, including an outer housing 2 and a cell 5. The cell 5 is received in a first receiving cavity of the outer housing 2. The outer housing 2 is arranged with an insulating member 1. An information obtaining component 3 is received in the first receiving cavity. The information obtaining component 3 is fixed to the cell 5. The information obtaining component 3 includes a detection assembly, a power supply battery 31, a wireless transmitting end 33, and a circuit board 32. The detection assembly, the power supply battery 31, and the wireless transmitting end 33 are electrically connected to each other through the circuit board 32. An detection end of the detection assembly is attached to the cell 5. The wireless transmitting end 33 is disposed adjacent to the insulating member 1, such that a signal emitted by the wireless transmitting end 33 may pass through the insulating member 1 to reach an exterior of the first receiving cavity. For example, the wireless transmitting end 33 is disposed at an end of the information obtaining component 3 near the insulating member 1. The insulating member 1 may have a first orthographic projection on a cover 22 of the outer housing 2, and a side of the information obtaining component 3 near the wireless transmitting end 33 may have a second orthographic projection on the cover 22 of the outer housing 2. The first orthographic projection may be connected to the second orthographic projection. In some embodiments, there may be no intersection between the first orthographic projection and the second orthographic projection, as long as a distance between the two projections allows the signal emitted by the wireless transmitting end 33 to pass through the insulating member 1 to reach the exterior of the receiving cavity. Since the information obtaining component 3 is disposed inside the battery and the obtained information are transmitted to the outside by transmitting wireless signals, the outer housing 2 may not define any hole. In this way, the production cost of the battery may be reduced, and versatility of the information obtaining component 3 may be improved. The power supply battery 31 is arranged inside the information obtaining component 3, i.e., the information obtaining component 3 has an independent power supply, the information obtaining component 3 operates independently. On the one hand, the information obtaining component 3 does not consume any electrical energy of the battery. On the other hand, failure of the information obtaining component 3 may not cause any systemic risk of the overall battery, ensuring reliability of the cell 5. Since the wireless transmitting end 33 is disposed adjacent to the insulating member 1, the wireless signals emitted by the wireless transmitting end 33 may not be shielded internally, ensuring the wireless transmitting end 33 to successfully transmit the obtained battery information to the exterior of the battery.

In the present embodiment, the outer housing 2 is made of metal. The outer housing 2 includes a case 21 and a cover 22. The case 21 is an aluminium case, and the insulating member 1 is arranged on the cover 22.

Further, the pole 4 extends through the insulating member 1 and the cover 22. That is, the insulating member 1 is disposed between an end of the pole 4 and the outer housing 2. The other end of the pole 4 extends through the insulating member 1 and the cover 22 to be further received in the first receiving cavity. The information obtaining component 3 is arranged on a side of the cell 5 near the pole 4. In the present embodiment, the insulating member 1 and the pole 4 are inherently arranged in the battery, and since the information obtaining component 3 is disposed on the side of the cell 5 near the pole 4, the structures, which are inherently arranged in the battery, may be configured to assist in transmitting the wireless signals. In this way, the case 2 is not arranged with any additional insulating structure, and the production cost of the battery is reduced.

As shown in FIG. 2 and FIG. 3, the detection assembly further includes a detection signal line 34. An end of the detection signal line 34 is connected to the circuit board 32, and the other end of the detection signal line 34 is arranged with a detection end. The cell 5 includes a first cell pack 51 and a second cell pack 52. The detection signal line 34 is disposed between the first cell pack 51 and the second cell pack 52. The detection end detects an attachment face of the first cell pack 51 and an attachment face of the second cell pack 52. Specifically, the first cell pack 51 has a first attachment face 511 facing the cover 22, and the second cell pack 52 has a second attachment face 521 facing the cover 22. That is, the detection end detects information of the first attachment face 511 of the first cell pack 51 and the second attachment face 521 of the second cell pack 52. It can be understood that, the first cell pack 51 and the second cell pack 52 generate heat while being operating. Heat of a part the first cell pack 51 for attachment and heat of a part of the second cell pack 52 for attachment may not be dissipated easily. That is, the first attachment face of the first cell pack 51 and the second attachment face of the second cell pack 52 are locations where heat can be gathered and the highest temperature can be generated. By setting the detection end on the first attachment face of the first cell pack 51 and the second attachment face of the second cell pack 52, the highest temperature of the cell 5 can be detected, such that a current state of the battery can be determined accurately.

In some embodiments, a heat-homogenization plate (not shown in the drawings) is arranged on both the first cell pack 51 and the second cell pack 52. The heat-homogenization plate defines an avoidance groove. The avoidance groove is defined to receive the detection signal line 34. It is understandable that, while the battery is being charged and discharged, various parts of the first attachment face of the first cell pack 51 and the second attachment face of the second cell pack 52 may have different temperatures. However, a range that can be detected by the detection end is limited. The detection end may detect a temperature of a point-sized region and may not be able to detect various regions of the attachment faces. The heat-homogenization plate is arranged on both the first cell pack 51 and the second cell pack 52. Therefore, heat accumulated locally in the first cell pack 51 and the second cell pack 52 may be transmitted to the detection end through the heat-homogenization plate, such that the detection end may accurately detect an actual temperature of the first cell pack 51 and the second cell pack 52. Accuracy of the detection is improved. In the present embodiment, the heat-homogenization plate is a copper plate.

Further, the information obtaining component 3 further includes a sealing shell 35. The sealing shell 35 has a second receiving cavity 351. The power supply battery 31, the wireless transmitting end 33, and the circuit board 32 are received in the second receiving cavity 351. It is understood that the first receiving cavity of the outer housing 2 is filled with electrolyte. While the battery is being charged and discharged, charged particles may enter the electrolyte to electrify the electrolyte. Since the power supply battery 31, the wireless transmitting end 33, the circuit board 32 and other structures of the information obtaining component 3 are received in the second receiving cavity 351 of the sealing shell 35, the above structures may be prevented from contacting the electrolyte, such that the information obtaining component 3 may not have a short circuit due to being interfered by the electrolyte. On the other hand, since the rest elements of the information obtaining component 3 are received in the second receiving cavity 351 of the sealing shell 35, integration of the information obtaining component 3 is improved, enabling the information obtaining component 3 to be mounted and fixed easily. In the present embodiment, an end of the detection signal line 34 is connected to the circuit board 32, and the other end of the detection signal line 34 is the detection end. The detection end passes through the sealing shell 35 to be received in the avoidance groove and to be attached to the heat-homogenization plate and a portion of a surface of the cell 5. The portion of the surface of the cell 5 attached with the detection end serve as a groove wall of the avoidance groove.

In the present embodiment, the case 22 of the outer housing 2 is arranged with a pole 4, and the pole 4 extends through the case 22. The pole 4 is connected to the cell 5. The sealing shell 35 abuts against a circumferential face of the pole 4. The sealing shell 35 is insulated from the pole 4. In the present embodiment, the information obtaining component 3 is fixed to the cell 5. The cell 5 has a mounting face 54 (formed by the first attachment face 511 of the first cell pack and the second attachment face 521 of the second cell pack). The mounting face 54 is arranged with a tab 53. The information obtaining component 3 is disposed on the mounting face 54. That is, the information obtaining component 3 is disposed in a space between the cell 5 and the cover 22. It can be understood that the battery of the present disclosure may have a large capacity. A size of the battery may be large accordingly. Since a space needs to be reserved for connecting the tab 53 of the cell 5 to the pole 4 on the cover 22, the space between the cell 5 and the cover 22 is generated. When the information obtaining component 3 is received in the space, the outer housing 2 may be adapted to the information obtaining component 3 without modifying the structure of the outer housing 2. On the one hand, versatility of the outer housing 2 is improved. On the other hand, an energy density of the battery may not be reduced. Since the sealing shell 35 abuts against the circumferential face of the pole 4, contact positioning between the sealing shell 35 and the pole 4 may be achieved, such that assembling the sealing shell 35 and the pole 4 may be less difficult.

In an embodiment, the sealing shell 35 is a non-metallic shell. Since the sealing shell 35 is non-metallic, the entire sealing shell 35 is insulated. Any conductive material from the outside may not enter the second receiving cavity 351 of the sealing shell 35, elements in the second receiving cavity 351 may not have short circuits. Exemplarily, the sealing shell 35 may be made of polyethylene glycol terephthalate (PET), polypropylene (PP); the sealing shell 35 may be shaped by film blister moulding. Alternatively, the sealing shell 35 may be formed by injection moulding, and treatments of high-frequency welding and ultrasonic waves may be performed to achieve sealing and insulating. The sealing shell 35 may be overall L-shaped to allow the power supply battery 31, the circuit board 32, and the wireless transmitting end 33 to be arranged conveniently.

In another embodiment, the insulating member 1 is disposed between the pole 4 and the cover 22 of the outer housing 2. The sealing shell 35 abuts against the insulating member 1. It is understood that the pole 4, the cover 22, and the insulating member 1 are inherently arranged in the battery. Arranging the insulating member 1 between the pole 4 and the cover 22 prevents the pole 4 from contacting the cover 22, such that a short circuit of the battery may be avoided. By arranging the sealing shell 35 to abut against the insulating member 1, the inherently arranged insulating structure may be taken to prevent the information obtaining component 3 from having the short circuit with the pole 4. In the present embodiment, the sealing shell 35 may be a metal shell. Of course, in this case, the sealing shell 35 needs to be insulated from the circuit board 32 and other electric structures, such as the power supply battery 31, such that the information obtaining component 3 may be prevented from being short-circuited by conductive substances carried by the electrolyte in the first receiving cavity. The sealing shell 35 may be spaced apart from the circuit board 32 and other electric structures to achieve insulation. Alternatively, an insulating layer may be arranged on an inner wall of the sealing shell 35. The sealing shell 35 may be a non-metallic shell. The non-metallic sealing shell 35 may be made of polyethylene glycol terephthalate (PET) or polypropylene (PP). The non-metallic sealing shell 35 may be formed by film blister moulding. Alternatively, the non-metallic sealing shell 35 may be an injection moulding shell, and high-frequency welding and ultrasonic operations may be performed to achieve insulation.

In the present embodiment, the sealing shell 35 is the non-metallic shell and abuts against the insulating member 1.

In some embodiments, the information obtaining component 3 is adhered to the cell 5. In the present embodiment, the information obtaining component 3 is adhered to the cell 5 by a tape. It is understood that the cell 5 includes an electrode sheet, a diaphragm and so on. The structure of the cell 5 is complex and includes electric elements. When the information obtaining component 3 is fixed to the electric core 5 by adhesion, the battery may be assembled less difficultly, and production cost of the battery may be reduced.

In the present embodiment, the detection signal line 34 of the information obtaining component 3 includes a pressure signal line 342 and a temperature signal line 341. The pressure signal line 342 is configured to collect a pressure of the cell 5, and the temperature signal line 341 is configured to collect a temperature of the cell 5.

In the present embodiment, the cell 5 has a mounting face 54 facing towards the cover 22. The mounting face 54 is arranged with the tab 53. The information obtaining component 3 is arranged on the mounting face 54. Two information obtaining components 3 may be arranged. The tab 53 is disposed between the two information obtaining components 3. In the present embodiment, the size of the battery is large. The two information obtaining components 3 are arranged to detect temperatures and pressures at various locations of the cell 5 more comprehensively, such that accuracy of the detection is improved. In other embodiments, the number of information obtaining components 3 is not limited to two, i.e., three, four or more information obtaining components 3 may be arranged. The number of information obtaining components 3 may be determined according to the actual demands of the battery.

The cell 5 includes the first cell pack 51 and the second cell pack 52. In an embodiment, one of the two information obtaining components 3 collects information of the first cell pack 51, and the other one of the two information obtaining components 3 collects information of the second cell pack 52. When the two information obtaining components 3 are arranged to collect information of the first cell pack 51 and the second cell pack 52 respectively, an operational state of the first cell pack 51 and an operational state of the second cell pack 52 may be determined independent from each other, and the state of the entire battery may be determined accordingly. In another embodiment, the two information obtaining components 3 cooperatively collect both the information of the first cell pack 51 and the information of the second cell pack 52. One of the two information obtaining components 3 collects information of a left region of the attachment face of the first cell pack 51 and the second cell pack 52, and the other one of the two information obtaining components 3 collects information of a right region of the attachment face of the first cell pack 51 and the second cell pack 52.

In the present embodiment, an outer periphery of the cell 5 is wrapped by a protective film 8. The battery further includes a bottom sheet 7 and a connector 6. The bottom sheet 7 and the connector 6 are both received in the first receiving cavity of the outer housing 2. The bottom sheet 7 is located at a bottom of the cell 5. The connector 6 is disposed between the cover 22 and the cell 5. The connector 6 is configured to connect the tab 53 of the cell 5 to the pole 4 on the cover 22. The circuit board 32 may be a printed circuit board (PCB). The wireless transmitting end 33 of the information obtaining component 3 is a signal transmitting antenna. The power supply battery 31 is a primary lithium battery, such as a lithium-manganese dioxide battery, a lithium thionyl chloride battery, and so on.

In the description herein, it is to be understood that the terms "up", "down", "left", "right", and so on indicate orientation or positional relationships shown in the accompanying drawings and are used only for the purpose of facilitating description and simplifying operations. These terms are not intended to indicate or imply that the device or the element must be constructed or operated in the particular orientation. Therefore, the terms shall not be interpreted as limitation of the present disclosure. In addition, the terms "first" and "second" are used only for describing distinguishing features and have no special meaning.

In the description of the present disclosure, the description with reference to the terms "embodiment", "example", and so on means that a specific feature, a structure, a material, or characteristic described in the embodiment or the example is included in at least one embodiment or example of the present disclosure. In the present specification, schematic expressions of the above terms do not necessarily refer to the same embodiment or example.

In addition, it should be understood that although the present specification is described in accordance with the embodiments, not each embodiment includes only one independent technical solution. The specification is described in such a manner merely for clarity. Any ordinary skilled person in the art shall take the specification as a whole. Technical solutions in various embodiments may be appropriately combined with each other to form other embodiments that may be understood by the ordinary skilled person in the art.

Technical principles of the present disclosure are described above by referring to specific embodiments. The description is only intended to explain the principles of the present disclosure and is not to limit the scope of the present disclosure. Based on the explanations herein, any other implementation, which is associated by any ordinary skilled person in the art without making creative work, shall fall within the scope of the present disclosure.

## Claims

1. A battery, comprising an outer housing (2), at least one information obtaining component (3), a pole (4) and a cell (5), wherein the cell (5) is received in a first receiving cavity of the outer housing (2), the outer housing (2) is arranged with an insulating member (1), the pole (4) extends through the outer housing (2) and is connected to the cell (5); the at least one information obtaining component (3) is received in the first receiving cavity and fixed to the cell (5), wherein each of the at least one information obtaining component (3) comprises a detection assembly, a power supply battery (31), a wireless transmitting end (33), a circuit board (32), and a sealing shell (35); the detection assembly, the power supply battery (31), and the wireless transmitting end (33) are electrically connected with each other via the circuit board (32); a detection end of the detection assembly is attached to the cell (5), the wireless transmitting end (33) is disposed adjacent to the insulating member (1) and is configured to transmit a signal, and the signal is capable of transmitting through the insulating member (1) to reach an exterior of the first receiving cavity;
**characterized in that**
the sealing shell (35) has a second receiving cavity, wherein the power supply battery (31), the wireless transmitting end (33), and the circuit board (32) are received in the second receiving cavity;
wherein the sealing shell (35) abuts against a circumferential face of the pole (4), and the sealing shell (35) is insulated from the pole (4).

2. The battery according to claim 1, wherein the pole (4) further extends through the insulating member (1), wherein the insulating member (1) is disposed between an end of the pole (4) and the outer housing (2), the other end of the pole (4) is received in the first receiving cavity; and the at least one information obtaining component (3) is arranged on a side of the cell (5) near the pole (4).

3. The battery according to claim 2, wherein, the detection assembly comprises a detection signal line (34);
an end of the detection signal line (34) is connected to the circuit board (32), the other end of the detection signal line (34) is arranged with the detection end;
the cell (5) comprises a first cell pack (51) and a second cell pack (52), the detection signal line (34) is disposed between the first cell pack (51) and the second cell pack (52);
the detection end is configured to detect information of a first attachment face (511) of the first cell pack (51) and information of a second attachment face (521) of the second cell pack (52), and the attachment face is a surface to which the detection end is attached.

4. The battery according to claim 3, wherein a heat-homogenization plate is arranged on both the first cell pack (51) and the second cell pack (52); the heat-homogenization defines an avoidance groove; and the detection signal line (34) is received in the avoidance groove.

5. The battery according to claim 1, wherein, the sealing shell (35) is non-metallic.

6. The battery according to claim 1, wherein, the insulating member (1) is disposed between the pole (4) and the outer housing (2), and the sealing shell (35) abuts against the insulating member (1).

7. The battery according to claim 6, wherein, the sealing shell (35) is insulated from the pole (4) through the insulating member (1).

8. The battery according to claim 1, wherein the at least one information obtaining component (3) is adhered to the cell (5).

9. The battery according to claim 1, wherein the number of the at least one information obtaining component (3) is at least two.

10. The battery according to claim 9, wherein, the number of the at least one information obtaining component (3) is two, the cell (5) has a mounting face (54), a tab (53) is arranged on the mounting face (54), the two information obtaining components (3) are arranged on the mounting face (54), the tab (53) is disposed between the two information obtaining components (3).

11. The battery according to claim 10, wherein the cell (5) comprises a first cell pack (51) and a second cell pack (52); one of the two information obtaining components (3) is configured to detect information on a first attachment face (511) of the first cell pack (51); and the other one of the two information obtaining components (3) is configured to detect information on a second attachment face of the second cell pack (52).

12. The battery according to claim 3, wherein, the detection signal line (34) comprises a temperature signal line (341) and a pressure signal line (342);
the information of the attachment face comprises a temperature of the attachment face and a pressure of the attachment face; and
the temperature signal line (341) is configured to detect the temperature of the attachment face; and the pressure signal line (342) is configured to detect the pressure of the attachment face.

## Patentansprüche

1. Eine Batterie, umfassend ein Außengehäuse (2), mindestens eine Informationsgewinnungskomponente (3), einen Pol (4) und eine Zelle (5), wobei die Zelle (5) in einem ersten Aufnahmehohlraum des Außengehäuses (2) aufgenommen ist, das Außengehäuse (2) mit einem Isolierelement (1) versehen ist, der Pol (4) das Außengehäuse (2) durchdringt und mit der Zelle (5) verbunden ist,
wobei mindestens eine Informationsgewinnungskomponente (3) in dem ersten Aufnahmehohlraum aufgenommen und an der Zelle (5) befestigt ist,
jede der mindestens eine Informationsgewinnungskomponente (3) ein Detektionsmodul, eine Versorgungsbatterie (31), ein drahtloses Sendeende (33), eine Leiterplatte (32) und eine Dichtungsschale (35) umfasst, das Detektionsmodul, die Versorgungsbatterie (31) und das drahtlose Sendeende (33) elektrisch über die Leiterplatte (32) miteinander verbunden sind,
ein Detektionsende des Detektionsmoduls an der Zelle (5) angebracht ist, das drahtlose Sendeende (33) in der Nähe des Isolierelements (1) angeordnet ist und zum Übertragen eines Signals ausgelegt ist, wobei das Signal das Isolierelement (1) durchdringen kann, um das Äußere des ersten Aufnahmehohlraums zu erreichen.
**gekennzeichnet dadurch, dass** die Dichtungsschale (35) einen zweiten Aufnahmehohlraum aufweist, in dem die Versorgungsbatterie (31), das drahtlose Sendeende (33) und die Leiterplatte (32) aufgenommen sind,
wobei die Dichtungsschale (35) an einer Umfangsfläche des Pols (4) anliegt und von dem Pol (4) isoliert ist.

2. Die Batterie gemäß Anspruch 1, wobei der Pol (4) weiterhin durch das Isolierelement (1) verläuft, das Isolierelement (1) zwischen einem Ende des Pols (4) und dem Außengehäuse (2) angeordnet ist, das andere Ende des Pols (4) in dem ersten Aufnahmehohlraum aufgenommen ist; und mindestens eine Informationsgewinnungskomponente (3) an einer Seite der Zelle (5) in der Nähe des Pols (4) angeordnet ist.

3. Die Batterie gemäß Anspruch 2, wobei das Detektionsmodul eine Detektionssignalleitung (34) umfasst;
ein Ende der Detektionssignalleitung (34) an der Leiterplatte (32) angeschlossen ist, und das andere Ende der Detektionssignalleitung (34) mit dem Detektionsende versehen ist;
die Zelle (5) ein erstes Zellenpaket (51) und ein zweites Zellenpaket (52) umfasst, die Detektionssignalleitung (34) zwischen dem ersten Zellenpaket (51) und dem zweiten Zellenpaket (52) angeordnet ist;
das Detektionsende konfiguriert ist, um Informationen einer ersten Befestigungsfläche (511) des ersten Zellenpakets (51) und Informationen einer zweiten Befestigungsfläche (521) des zweiten Zellenpakets (52) zu detektieren, wobei die Befestigungsfläche eine Oberfläche ist, an der das Detektionsende angebracht ist.

4. Die Batterie gemäß Anspruch 3, wobei auf dem ersten Zellenpaket (51) und dem zweiten Zellenpaket (52) eine Wärmehomogenisationsplatte angeordnet ist;
die Wärmehomogenisationsplatte eine Ausweichnut definiert;
und die Detektionssignalleitung (34) in der Ausweichnut aufgenommen ist.

5. Die Batterie gemäß Anspruch 1, wobei die Dichtungsschale (35) nicht metallisch ist.

6. Die Batterie gemäß Anspruch 1, wobei das Isolierelement (1) zwischen dem Pol (4) und dem Außengehäuse (2) angeordnet ist und die Dichtungsschale (35) an dem Isolierelement (1) anliegt.

7. Die Batterie gemäß Anspruch 6, wobei die Dichtungsschale (35) über das Isolierelement (1) vom Pol (4) isoliert ist.

8. Die Batterie gemäß Anspruch 1, wobei mindestens eine Informationsgewinnungskomponente (3) an der Zelle (5) befestigt ist.

9. Die Batterie gemäß Anspruch 1, wobei die Anzahl der Informationsgewinnungskomponenten (3) mindestens zwei beträgt.

10. Die Batterie gemäß Anspruch 9, wobei die Anzahl der Informationsgewinnungskomponenten (3) zwei beträgt, die Zelle (5) eine Montagefläche (54) aufweist, eine Lasche (53) auf der Montagefläche (54) angeordnet ist, die beiden Informationsgewinnungskomponenten (3) auf der Montagefläche (54) angeordnet sind, die Lasche (53) zwischen den beiden Informationsgewinnungskomponenten (3) angeordnet ist.

11. Die Batterie gemäß Anspruch 10, wobei die Zelle (5) ein erstes Zellenpaket (51) und ein zweites Zellenpaket (52) umfasst; eine der beiden Informationsgewinnungskomponenten (3) konfiguriert ist, um Informationen auf einer ersten Befestigungsfläche (511) des ersten Zellenpakets (51) zu detektieren; und die andere der beiden Informationsgewinnungskomponenten (3) konfiguriert ist, um Informationen auf einer zweiten Befestigungsfläche des zweiten Zellenpakets (52) zu detektieren.

12. Die Batterie gemäß Anspruch 3, wobei die Detektionssignalleitung (34) eine Temperatursignalleitung (341) und eine Drucksignalleitung (342) umfasst;
die Informationen der Befestigungsfläche eine Temperatur der Befestigungsfläche und einen Druck der Befestigungsfläche umfassen;
und die Temperatursignalleitung (341) konfiguriert ist, um die Temperatur der Befestigungsfläche zu detektieren;
und die Drucksignalleitung (342) konfiguriert ist, um den Druck der Befestigungsfläche zu detektieren.

## Revendications

1. Une batterie, comprenant un boîtier externe (2), au moins un composant d'obtention d'informations (3), une borne (4) et une cellule (5), la cellule (5) étant logée dans une première cavité de réception du boîtier externe (2), le boîtier externe (2) étant pourvu d'un élément isolant (1), la borne (4) traversant le boîtier externe (2) et étant raccordée à la cellule (5), au moins un composant d'obtention d'informations (3) étant logé dans la première cavité de réception et fixé à la cellule (5), chaque composant d'obtention d'informations (3) comprenant un module de détection, une batterie d'alimentation (31), une extrémité d'émission sans fil (33), une carte de circuit imprimé (32) et une coque d'étanchéité (35), le module de détection, la batterie d'alimentation (31) et l'extrémité d'émission sans fil (33) étant électriquement reliés les uns aux autres via la carte de circuit imprimé (32), une extrémité de détection du module de détection étant appliquée contre la cellule (5), l'extrémité d'émission sans fil (33) étant disposée à proximité de l'élément isolant (1) et étant configurée pour émettre un signal, ledit signal étant apte à traverser l'élément isolant (1) pour atteindre l'extérieur de la première cavité de réception;
**caractérisée en ce que** la coque d'étanchéité (35) présente une deuxième cavité de réception, la batterie d'alimentation (31), l'extrémité d'émission sans fil (33) et la carte de circuit imprimé (32) étant logées dans la deuxième cavité de réception, et dans laquelle
la coque d'étanchéité (35) venant en appui contre une face circonférentielle de la borne (4), la coque d'étanchéité (35) étant isolée de ladite borne (4).

2. La batterie selon la revendication 1, dans laquelle la borne (4) traverse en outre l'élément isolant (1), l'élément isolant (1) étant disposé entre une extrémité de la borne (4) et le boîtier externe (2), l'autre extrémité de la borne (4) étant logée dans la première cavité de réception ; et au moins un composant d'obtention d'informations (3) étant disposé sur un côté de la cellule (5) proche de la borne (4).

3. La batterie selon la revendication 2, dans laquelle le module de détection comprend une ligne de signal de détection (34) ;
une extrémité de la ligne de signal de détection (34) étant raccordée à la carte de circuit imprimé (32), l'autre extrémité de la ligne de signal de détection (34) étant pourvue de l'extrémité de détection ;
la cellule (5) comprenant un premier pack de cellules (51) et un second pack de cellules (52), la ligne de signal de détection (34) étant disposée entre le premier pack de cellules (51) et le second pack de cellules (52) ;
l'extrémité de détection étant configurée pour détecter les informations d'une première face de fixation (511) du premier pack de cellules (51) et les informations d'une seconde face de fixation (521) du second pack de cellules (52), la face de fixation étant une surface sur laquelle l'extrémité de détection est appliquée.

4. La batterie selon la revendication 3, dans laquelle une plaque d'homogénéisation thermique est disposée sur le premier pack de cellules (51) et le second pack de cellules (52) ; la plaque d'homogénéisation thermique définissant une rainure d'évitement ; et la ligne de signal de détection (34) étant logée dans la rainure d'évitement.

5. La batterie selon la revendication 1, dans laquelle la coque d'étanchéité (35) est non métallique.

6. La batterie selon la revendication 1, dans laquelle l'élément isolant (1) est disposé entre la borne (4) et le boîtier externe (2), et la coque d'étanchéité (35) vient en appui contre l'élément isolant (1).

7. La batterie selon la revendication 6, dans laquelle la coque d'étanchéité (35) est isolée de la borne (4) par l'intermédiaire de l'élément isolant (1).

8. La batterie selon la revendication 1, dans laquelle au moins un composant d'obtention d'informations (3) est collé à la cellule (5).

9. La batterie selon la revendication 1, dans laquelle le nombre de composants d'obtention d'informations (3) est d'au moins deux.

10. La batterie selon la revendication 9, dans laquelle le nombre de composants d'obtention d'informations (3) est de deux, la cellule (5) comportant une face de montage (54), une languette (53) étant disposée sur la face de montage (54), les deux composants d'obtention d'informations (3) étant disposés sur la face de montage (54), la languette (53) étant disposée entre les deux composants d'obtention d'informations (3).

11. La batterie selon la revendication 10, dans laquelle la cellule (5) comprend un premier pack de cellules (51) et un second pack de cellules (52) ; l'un des deux composants d'obtention d'informations (3) étant configuré pour détecter les informations sur une première face de fixation (511) du premier pack de cellules (51) ; et l'autre des deux composants d'obtention d'informations (3) étant configuré pour détecter les informations sur une seconde face de fixation du second pack de cellules (52).

12. La batterie selon la revendication 3, dans laquelle la ligne de signal de détection (34) comprend une ligne de signal de température (341) et une ligne de signal de pression (342) ;
les informations de la face de fixation comprenant une température de la face de fixation et une pression de la face de fixation ;
et la ligne de signal de température (341) étant configurée pour détecter la température de la face de fixation ;
et la ligne de signal de pression (342) étant configurée pour détecter la pression de la face de fixation.
